# EUROPÄISCHE PATENTSCHRIFT

(11) **EP 1 034 988 B1**
(45) Veröffentlichungstag und Bekanntmachung des Hinweises auf die Patenterteilung: **28.04.2004**
(21) Anmeldenummer: 00102372.0
(22) Anmeldetag: 04.02.2000
(51) Int. Cl.: B60R 21/20

(54) **Anbindung für die Instrumententafel eines mit einem Airbag ausgerüsteten Personenkraftwagens**
Attachment for the dash panel of a passenger car equipped with an airbag
Fixation pour la planche de bord d'une voiture automobile pourvue d'un coussin gonflable

(30) Priorität: 09.03.1999 DE 19910332
(43) Veröffentlichungstag der Anmeldung: 13.09.2000
(73) Patentinhaber: Bayerische Motoren Werke Aktiengesellschaft, 80809 München (DE)
(72) Erfinder: Metzger, Otto, 82110 Germering (DE)

(56) Entgegenhaltungen:
- DE-A- 19 714 356
- US-A- 5 395 133
- US-A- 5 503 427

## Beschreibung

Die Erfindung betrifft eine Anbindung für die Instrumententafel eines mit einem Airbag für den Beifahrer ausgerüsteten Personenkraftwagens mit einem den Airbag aufnehmenden Gehäuse, das mittelbar oder unmittelbar mit dem Fahrzeugrahmen verbunden ist, umfassend ein oder. mehrere Rückhaltebauteile, die mittelbar mit dem Fahrzeugrahmen verbunden sind und an der Instrumententafel nahe einem Aufreißbereich derselben befestigt sind, der an einer Seite über ein scharnierartiges Bauteil und an den übrigen Seiten über einen geschwächten Bereich mit der Instrumententafel verbunden ist, wobei das oder die Rückhaltebauteile bei der Auslösung des Airbags Zugkräfte aufnehmen können und beim Aufbringen einer Druckkraft nachgeben können.

Bei der Auslösung des Airbags für den Beifahrer wirken auf die Instrumententafel sehr hohe dynamische Kräfte. Dies kann dazu führen, dass nicht nur der Aufreißbereich, sondern die gesamte Instrumententafel angehoben werden kann. Dadurch kann nicht nur die Windschutzscheibe beschädigt werden, sondern es ist auch die Reproduzierbarkeit der Entfaltung des Airbags beeinträchtigt. Aus diesem Grund ist man dazu übergegangen, die Instrumententafel fest anzubinden. Bei einer aus der DE 197 14 356 A1 bekannten Anbindung der vorstehend beschriebenen Art werden die Rückhaltebauteile von einem stufenförmigen Konstruktionselement gebildet, das nicht nur Zugkräfte aufnehmen, sondern auch beim Aufbringen einer Druckkraft nachgeben kann, wobei durch eine Verformung Stoßenergie absorbiert wird. Diese Konstruktionselemente sind an dem Gehäuse beispielsweise durch Schweißen befestigt. Eines der Konstruktionselemente ist mit dem Fahrzeugrahmen verbunden, während die übrigen Konstruktionselemente mit der Instrumententafel verbunden sind. Bei einer in dieser Weise angebundenen Instrumententafel können aber die Befestigungspunkte ausreißen. Ferner ist ein gewisser Aufwand zum Toleranzausgleich zwischen dem Tragrohr und der Instrumententafel nötig. Die Anbindung kann sich bei Temperatureinflüssen auch auf der Oberseite der Instrumententafel abzeichnen.

Der Erfindung liegt die Aufgabe zugrunde, die gattungsgemäße Anbindung für die Instrumententafel dahingehend weiterzubilden, dass diese zwar Zugkräfte, aber keine nennenswerten Zugkräfte aufnehmen kann.

Erfindungsgemäß wird diese Aufgabe dadurch gelöst, dass das oder die Rückhaltebauteile aus einem Textilmaterial bestehen, und dass das oder die Rückhaltebauteile einerseits mit einem Rahmen verbunden sind, der an dem Gehäuse lösbar befestigt ist, und andererseits mittelbar oder unmittelbar an der Instrumententafel befestigt sind.

Durch die Elastizität des Rückhaltebauteils bzw. eine kleine Überlänge desselben ist ein gesonderter Toleranzausgleich zur Montage entbehrlich Es ist auch keine Fehleinstellung möglich. Durch die Elastizität des Textilmaterials wird bei der Auslösung des Airbags die Belastung nicht schlagartig, sondern verzögert in die Anbindung eingeleitet, wodurch das Ausreißen der Anbindungspunkte an der Instrumententafel verhindert wird. Die Instrumententafel wird erst leicht angehoben, bevor der Aufreißbereich aufklappt. Nach Lösen der Verbindung zwischen dem Rahmen und dem Gehäuse kann der Rahmen gegenüber dem Airbagmodul bewegt werden. Dies ermöglicht eine einfache Demontage des Airbagmoduls.

Das Rückhaltebauteil ist vorzugsweise ein umlaufendes Gewebeband, das einen geschlossenen Kanal bildet. Der geschlossene Kanal dient als sogenannter Schußkanal für den Airbag, wodurch eine gezielte Entfaltung gewährleistet ist und ein ungewolltes Ausbreiten des Luftsackes unter der Instrumententafel verhindert wird.

Die Befestigung des oder der Rückhaltebauteile an der Instrumententafel kann in der Weise verwirklicht werden, daß diese zwischen einem oberen Rahmen und der Instrumententafel eingespannt sind. Bei einer hinsichtlich der Anzahl der verwendeten Bauelemente besonders vorteilhaften Ausführungsform ist jedoch vorgesehen, daß das oder die Rückhaltebauteile unmittelbar an der Instrumententafel befestigt sind und daß ein Bereich des oder der Rückhaltebauteile an dem Aufreißbereich der Instrumententafel befestigt ist und das Scharnier bildet Durch das textile Rückhaltebauteil wir ein weiches Scharnier geschaffen, so daß nach Öffnen des Aufreißbereichs keine festen Kanten in Richtung des Beifahrers weisen.

Zwei Ausführungsbeispiele der Erfindung sind in der Zeichnung dargestellt und werden nachfolgend näher erläutert. Es zeigt:
Fig. 1 einen Querschnitt durch eine erste Ausführungsform einer Anbindung, und
Fig. 2 einen Querschnitt durch eine zweite Ausführungsform einer Anbindung.

Die Zeichnung zeigt einen parallel zur Längsachse eines Personenkraftwagens gelegten Schnitt durch die Instrumententafel. Die Instrumententafel besteht aus einem Instrumententafel-Einleger 10, einer geschäumten Schicht 11 und einer Außenhaut 12, die einstückig miteinander verbunden sind. Im Abstand unter der Instrumententafel erstreckt sich ein Tragrohr 13, das einen Teil der Karosserie bildet. An dem Tragrohr 13 sind zwei Halter 14 im gegenseitigen Abstand befestigt. Mit den beiden Haltern 14 ist ein Gehäuse 15 eines Airbagmoduls 16 verbunden. Das Airbagmodul 16 ist eine Einheit, bestehend aus einem Gehäuse, einem Gasgenerator, einem zusammengefalteten Luftsack und einer Abdeckung.

In der Instrumententafel ist über dem Airbagmodul 16 ein Aufreißbereich 17 ausgebildet. Dieser Aufreißbereich 17 ist über einen geschwächten Bereich mit der Instrumententafel verbunden.

Ein Rückhaltebauteil 19 aus einem schlauchförmigen Textilmaterial ist an seinem unteren Rand mit einem Rahmen 18 verbunden. Der Rahmen 18 ist mit dem Gehäuse 15 des Airbagmoduls 16 lösbar verschraubt. Der obere Randbereich des schlauchförmigen Textilmaterials 19 ist geschlitzt, so daß vier Teilbereiche gebildet sind. Drei der vier Teilbereiche sind nach außen in den Instrumententafelbereich gebogen und in die geschäumte Schicht 11 der Instrumententafel eingeschäumt. Der vierte Teilbereich 19a des schlauchförmigen Textilmaterials 19 ist nach innen in den Aufreißbereich 17 umgebogen und in die geschäumte Schicht 11 des Aufreißbereichs 17 eingeschäumt

Wenn der Gasgenerator des Airbagmoduls 16 gezündet wird, dann dehnt sich der Luftsack nach oben aus, wobei das schlauchartige Textilmaterial 19 den Luftsack führt und verhindert, daß dieser seitlich unter die Instrumententafel ausweicht. Der von dem Luftsack auf die Instrumententafel ausgeübte Druck wird von den in die geschäumte Schicht 11 eingebetteten Teilbereichen des Rückhaltebauteils 19 aufgenommen und über den Rahmen 18 in das Gehäuse 15 und von diesem über die Halter 14 in das Tragrohr 13 eingeleitet. Das Rückhaltebauteil 19 verhindert somit, daß die Instrumententafel von dem Luftsack nach oben gedrückt wird. Andererseits wird der Aufreißbereich 17 der Instrumententafel unter dem von dem Luftsack ausgeübten Druck leicht nach oben ausgewölbt, bis der umgebende geschwächte Bereich gezielt öffnet. Daraufhin wirkt der nach innen umgefaltete Teilbereich 19a des Rückhaltebauteils 19 als Scharnier, um das der Aufreißbereich 17 nach oben geschwenkt wird. Daraufhin kann der Luftsack in den Innenraum des Fahrzeugs austreten und sich vollständig entfalten.

Um eine Demontage des Airbagmoduls 16 zu ermöglichen, wird die Verschraubung des Rahmens 18 mit dem Gehäuse 15 gelöst, so daß der Rahmen 18 nach oben geschoben werden kann, wobei das schlauchförmige Textilmaterial 19 membranartig gefaltet wird. Im übrigen ist der Rahmen 18 in einer solchen Lage an dem Gehäuse 15 befestigt, daß der im seitlichen Bereich des Airbagmoduls 16 angeordnete Stecker für die elektrischen Leitungen gut zugänglich ist.

Bei allen vorstehend erläuterten Ausführungsformen könnte das Rückhaltebauteil 19 anstelle eines Schlauches auch von mehreren Bändern aus einem Textilmaterial gebildet sein. Der Schlauch oder die Bänder könnten auch aus einem anderen nachgiebig gestalteten Material bestehen.

Da das Rückhaltebauteil 19, d.h. der Schlauch bzw. die einzelnen Textilbänder eine Zugkraft aufnehmen können, wird verhindert, daß sich die Instrumententafel bei einer Auslösung des Airbagmoduls 16 unter dem von dem aufgeblasenen Luftsack ausgeübten Druck nach oben bewegt. Da das Rückhaltebauteil 19 aber andererseits keine Druckkräfte aufnehmen kann, weil es nachgibt, besteht eine Verformbarkeit der Instrumententafel nach unten. Dadurch wird verhindert, daß sich die Befestigungspunkte bei einer unterschiedlichen Wärmeausdehnung durch die Instrumententafel durchdrücken und abzeichnen, und es sind insbesondere größere Toleranzen beim Einbau des Airbagmoduls, d.h. bei der Befestigung des Gehäuses 15 über die Halter 14 an dem Tragrohr 13 möglich.

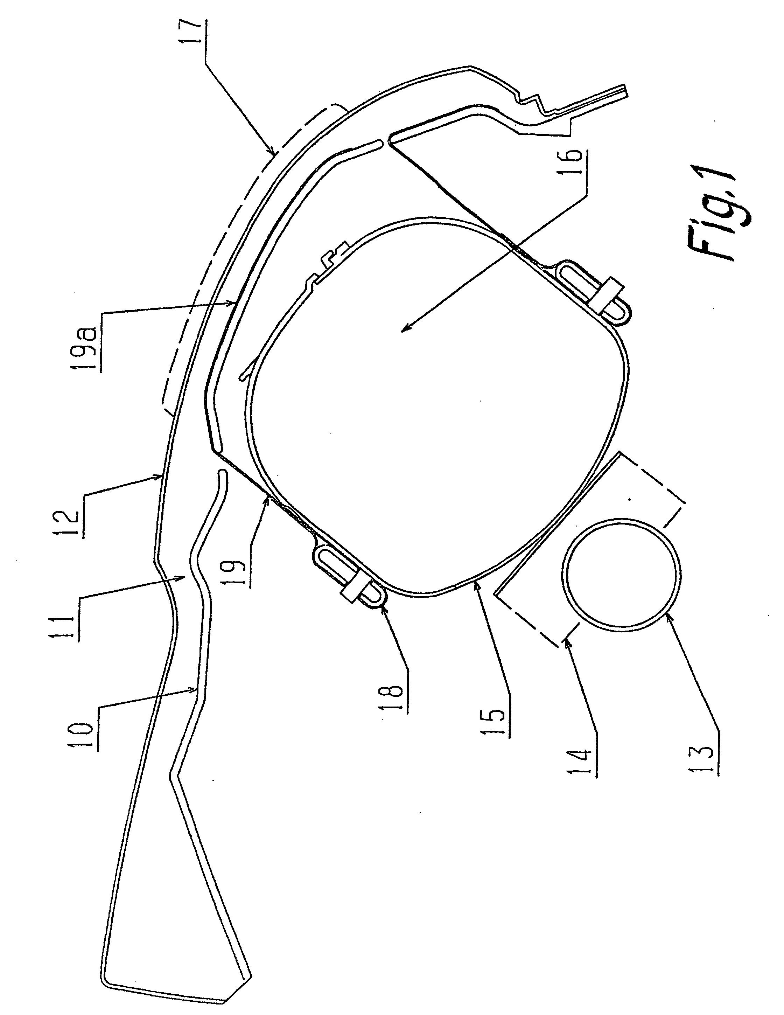

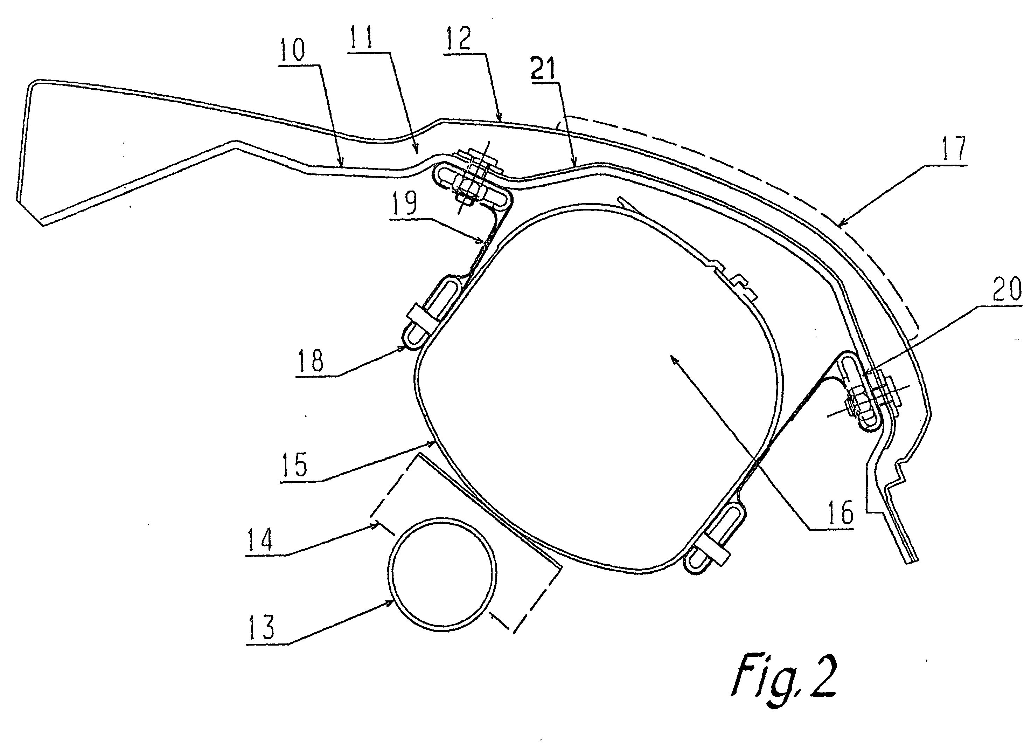

Die in Fig. 2 dargestellte Ausführungsform unterscheidet sich von derjenigen nach Fig. 1 dadurch, daß der obere Rand des Rückhaltebauteils 19 mit einem oberen Rahmen 20 verbunden ist, der seinerseits am Umfang des Aufreißbereichs 17 mit der Instrumententafel verschraubt ist. Genauer gesagt der obere Rahmen 20 ist in den oberen Rand des Rückhaltebauteils 19 eingenäht. Alternativ könnte in den oberen Umfangsrand des Rückhaltebauteils auch ein Keder eingenäht sein, der ein Durchrutschen unter dem oberen Rahmen verhindert. Bei dieser Ausführungsform wird das scharnierartige Bauteil von einem Scharnierblech 21 gebildet.

### Bezugszeichenliste:

- 10: Instrumententafel-Einleger
- 11: geschäumte Schicht
- 12: Außenhaut
- 13: Tragrohr
- 14: Halter
- 15: Gehäuse
- 16: Airbagmodul
- 17: Aufreißbereich
- 18: Rahmen
- 19: Rückhaltebauteil
- 19a: Teilbereich
- 20: oberer Rahmen
- 21: Schamierblech

## Patentansprüche

1. Anbindung für die Instrumententafel eines mit einem Airbag für den Beifahrer ausgerüsteten Personenkraftwagens mit einem den Airbag aufnehmenden Gehäuse (15), das mittelbar oder unmittelbar mit dem Fahrzeugrahmen verbunden ist, umfassend ein oder mehrere Rückhaltebauteile (19), die mittelbar mit dem Fahrzeugrahmen verbunden sind und an der Instrumententafel (10, 11, 12) nahe einem Aufreißbereich (17) derselben befestigt sind, der an einer Seite über ein scharnierartiges Bauteil und an den übrigen Seiten über einen geschwächten Bereich mit der Instrumententatel (10, 11, 12) verbunden ist, wobei das oder die Rückhaltebauteile (19) bei der Auslösung des Airbags Zugkräfte aufnehmen können und beim Aufbringen einer Druckkraft nachgeben können, **dadurch gekennzeichnet, dass** das oder die Rückhaltebauteile (19) aus einem Textilmaterial bestehen, und dass das oder die Rückhaltebauteile (19) einerseits mit einem Rahmen (18) verbunden sind, der an dem Gehäuse (15) lösbar befestigt ist und andererseits mittelbar oder unmittelbar an der Instrumententafel (10, 11, 12) befestigt sind.

2. Anbindung nach Anspruch 1, **dadurch gekennzeichnet, dass** das Rückhaltebauteil (19) ein umlaufendes Gewebeband ist, das einen geschlossenen Kanal begrenzt.

3. Anbindung nach Anspruch 1 oder 2, **dadurch gekennzeichnet, dass** das oder die Rückhaltebauteile (19) zwischen einem oberen Rahmen (20) und der Instrumententafel (10, 11, 12) eingespannt sind.

4. Anbindung nach Anspruch 1 oder 2, **dadurch gekennzeichnet, dass** das oder die Rückhaltebauteile (19) unmittelbar an der Instrumententafel (10, 11, 12) befestigt sind und dass ein Bereich (19a) des oder der Rückhaltebauteile an dem Aufreißbereich (17) der Instrumententafel befestigt ist und das Scharnier bildet.

5. Anbindung nach Anspruch 4, **dadurch gekennzeichnet, dass** ein oberer Randbereich des oder der Rückhaltebauteile (19) in eine geschäumte Schicht (11) der Instrumententafel (10,11,12) bzw. des Aufreißbereichs (17) derselben eingebettet ist.

## Claims

1. A tie-in for the instrument panel of a passenger car equipped with a passenger's airbag, comprising a casing (15) holding the airbag, directly or indirectly connected to the vehicle frame and containing one or more retaining components (19) which are indirectly connected to the vehicle frame and fastened to the instrument panel (10, 11, 12) near a tear-open region (17) thereof connected to the instrument panel (10, 11, 12) via a hinge-like component on one side and via a weakened region on the other sides, wherein the retaining part or parts (19) are adapted to absorb tensile stresses when the airbag is released and can yield under a compressive force, **characterised in that** the retaining part or parts (19) are made of a textile material and are connected on one side to a frame (18) releasably fastened to the casing (15) whereas on the other side they are directly or indirectly fastened to the instrument panel (10, 11, 12).

2. A tie-in according to claim 1, **characterised in that** the retaining component (19) is a peripheral fabric strip bounding a closed duct.

3. A tie-in according to claim 1 or claim 2, **characterised in that** the retaining component or components (19) are clamped between an upper frame (20) and the instrument panel (10, 11, 12).

4. A tie-in according to claim 1 or claim 2, **characterised in that** the retaining component or components (19) are directly fastened to the instrument panel (10, 11, 12) and a region (19a) of the retaining part or parts is fastened to the tear-open region (17) of the instrument panel and forms the hinge.

5. A tie-in according to claim 4, **characterised in that** an upper edge region of the retaining component or components (19) is embedded in a foamed layer (11) of the instrument panel (10, 11, 12) or of the tear-open region (17) thereof.

## Revendications

1. Fixation pour la planche de bord d'une voiture automobile pourvue d'un coussin gonflable pour le passager avant avec un boîtier (15) recevant le coussin d'air de sécurité, relié directement ou indirectement à la carrosserie du véhicule, comprenant un ou plusieurs composants de retenue (19) reliés indirectement avec la carrosserie du véhicule et fixés à la planche de bord (10, 11, 12), à proximité d'une zone d'arrachage de celle-ci, reliée à la planche de bord (10, 11, 12) d'un côté par un composant de type charnière et de l'autre côté par une zone affaiblie, le ou les composants de retenue (19) pouvant recevoir une force de traction lors de la libération du coussin gonflable et céder lorsqu'ils sont soumis à une force de pression,
**caractérisée en ce que**
le ou les composants de retenue (19) sont en matériau textile, et le ou les composants (19) sont reliés d'une part avec un cadre (18), de manière détachable au boîtier (15) et d'autre part directement ou indirectement avec la planche de bord (10, 11, 12).

2. Fixation selon la revendication 1,
**caractérisée en ce que**
le composant de retenue (19) est une bande de tissus en forme de tuyau qui délimite un canal fermé.

3. Fixation selon l'une quelconque des revendications 1 ou 2,
**caractérisée en ce que**
le ou les composants de retenue sont insérés en tension entre le cadre supérieur (20) et la planche de bord (10, 11, 12).

4. Fixation selon l'une quelconque des revendications 1 ou 2,
**caractérisée en ce que**
le ou les composants de retenue (19) sont fixés directement à la planche de bord (10, 11, 12) et une zone (19a) du ou des composants de retenue est fixée à la zone d'arrachage (17) et constitue la charnière.

5. Fixation selon la revendication 4,
**caractérisée en ce que**
une zone de bord supérieur du ou des composants de retenue (19) est noyée dans une couche en mousse (11) de la planche de bord (10, 11, 12) ou de la zone d'arrachage (17).
